Europäisches Patentamt

European Patent Office

Office européen des brevets

(11) Veröffentlichungsnummer: **0 337 228**
**A1**

## (12) EUROPÄISCHE PATENTANMELDUNG

(21) Anmeldenummer: 89105792.9

(22) Anmeldetag: 03.04.89

(51) Int. Cl.⁴: **C08K 3/04 , C08L 75/04**

(30) Priorität: **14.04.88 DE 3812348**

(43) Veröffentlichungstag der Anmeldung:
**18.10.89 Patentblatt 89/42**

(84) Benannte Vertragsstaaten:
**AT BE CH DE ES FR GB IT LI NL**

(71) Anmelder: **BAYER AG**

**D-5090 Leverkusen 1 Bayerwerk(DE)**

(72) Erfinder: **Haas, Peter, Dr.**
**Zwengenberger Strasse 43**
**D-5657 Haan 1(DE)**
Erfinder: **Hettel, Hans, Dr.**
**Jaegerstrasse 20**
**D-5064 Roesrath(DE)**

(54) **Verfahren zur Herstellung von Polyurethanschaumstoffen.**

(57) Polyurethanschaumstoffe werden durch Umsetzung von 1) Polyisocyanaten mit 2) mindestens zwei gegenüber Isocyanaten aktive Wasserstoffatome aufweisenden Polyestern, Polycarbonaten, Polylactonen und/oder Polyamiden vom Molekulargewicht 400 bis 10 000 in Gegenwart von 3) Wasser und/oder organischen Treibmitteln und von 4) Katalysatoren und 5)

a) 1 bis 30 Teilen (bezogen auf 2)) eines durch anorganische blähfähige Materialien modifizierten Graphits, bevorzugt 1 bis 20 Teilen, besonders bevorzugt 2,5 bis 15 Teilen, alleine oder vorzugsweise in Kombination mit

b) 1 bis 30 Teilen (bezogen auf 2)) eines anorganischen Co-Flammschutzmittels, bevorzugt 1 bis 25 Teilen, besonders bevorzugt 2,5 bis 20 Teilen, als Flammschutzmittel.
gegebenenfalls in Gegenwart von 6) Verbindungen mit mindestens zwei gegenüber Isocyanaten reaktionsfähigen Wasserstoffatomen und einem Molekulargewicht von 32 bis 399 sowie 7) an sich bekannten oberflächenaktiven Zusatzstoffen und weiteren, an sich bekannten Hilfsmitteln hergestellt.

EP 0 337 228 A1

## Verfahren zur Herstellung von Polyurethanschaumstoffen

Seit langem wird versucht, Polyurethanschaumstoffe auf der Basis von Polyetherpolyolen und Polyesterpolyolen flammwidrig einzustellen. Hierzu können unterschiedliche Phosphorsäureester, aber auch Metalloxide herangezogen werden. In der GB-A 2 168 706 wird als Flammschutzmittel für PUR-Polyetherschaumstoffe expandierbarer Graphit vorgeschlagen. Dabei wurden jedoch folgende Nachteile festgestellt:

- starke Dochtwirkung durch die Graphitkomponente, die zum Weiterbrennen führt
- starke Flugaschenbildung und zum Teil noch glühende Rußbildung
- feinpulvriger, sehr leicht verstäubbarer Abbrand.

Überraschend wurde gefunden, daß bei einer Verwendung von expandierbarem Graphit als Flammschutzmittel in PUR-

Esterschaumstoffen diese für eine technische Nutzung hinderlichen Nachteile nicht auftreten.

Setzt man in einem Vergleich zu den in der GB-A 2 168 706 beschriebenen PUR-Etherschaumstoffen stattdessen erfindungsgemäß Esterschaumstoffe ein, so erhält man mit expandierbarem Graphit alleine, besonders jedoch in Kombination mit anorganischen flammwidrigen Zusatzstoffen folgendes Erscheinungsbild bei einer Beflammung dieser Esterschaumstoffe:

- keine Dochtwirkung durch den Graphitzusatz
- keine Flugaschenbildung
- keinen pulvrigen Abbrand

sondern einen

- stark carbonisierenden
- selbstverlöschenden
- nicht tropfenden

Schaumstoff.

Dies wird durch eine Reihe gebräuchlicher Flammschutznormen belegt, wie z.B.

BS 5852, Part 2 Crib 5-Test, DIN 4102, MVSS und UL 94.

Gegenstand der Erfindung ist ein Verfahren zur Herstellung von Polyurethanschaumstoffen durch Umsetzung von 1) Polyisocyanaten mit 2) mindestens zwei gegenüber Isocyanaten aktive Wasserstoffatome aufweisenden Polyestern, Polycarbonaten, Polylactonen und/oder Polyamiden vom Molekulargewicht 400 bis 10 000 in Gegenwart von 3) Wasser und/oder organischen Treibmitteln und von 4) Katalysatoren und 5) Flammschutzmitteln, gegebenenfalls in Gegenwart von 6) Verbindungen mit mindestens zwei gegenüber Isocyanaten reaktionsfähigen Wasserstoffatomen und einem Molekulargewicht von 32 bis 399 sowie 7) an sich bekannten oberflächenaktiven Zusatzstoffen und weiteren, an sich bekannten Hilfsmitteln, dadurch gekennzeichnet, daß als Flammschutzmittel 5)

a) 1 bis 30 Teile (bezogen auf 2)) eines durch anorganische blähfähige Materialien modifizierten Graphits, bevorzugt 1 bis 20 Teile, besonders bevorzugt 2,5 bis 15 Teile alleine, bevorzugt jedoch in Kombination mit

b) 1 bis 30 Teilen (bezogen auf 2)) eines anorganischen Co-Flammschutzmittels, bevorzugt 1 bis 25 Teilen, besonders bevorzugt 2,5 bis 20 Teilen,

verwendet werden.

Bevorzugte Ausführungsformen des erfindungsgemäßen Verfahrens sind dadurch gekennzeichnet,

- daß ein Sulfat-enthaltenden Blähgraphit, dessen Sulfat-Gehalt zwischen 1 und 40 %, bevorzugt 1 bis 30 %, besonders bevorzugt 5 bis 20 % liegt, verwendet wird,
- daß als Co-Flammschutzmittel Ammoniumpolyphosphat verwendet wird,
- daß als Co-Flammschutzmittel Kalkstickstoff verwendet wird,
- daß als Co-Flammschutzmittel Aluminiumoxidhydrat verwendet wird,
- daß als Co-Flammschutzmittel Calciumcarbonat verwendet wird.

Die Ausführungsbeispiele der GB-A 2 168 706 zeigen alle den erheblichen Nachteil einer starken Dochtwir kung durch die Blähgraphit-Komponente, verbunden mit einem Weiterbrennen und der Bildung eines völlig ungebundenen Abbrandes feinster Asche.

Überraschend wurde jedoch in PUR-Esterschaumstoffen gefunden, daß besonders bei Verwendung phosphorhaltiger anorganischer Zusätze hervorragend carbonisie rende, zusammenhängende, flammwidrige und schwer entzündbare sowie selbstverlöschende Produkte erhalten werden. Vorteilhaft ist auch die jeweils geringe Wirkstoffmenge in der erfindungsgemäßen Kombination, um einen wirksamen Flammschutz zu erreichen. Bislang müssen nämlich jeweils 30 Teile der Einzelkomponenten verwendet werden.

Für die Herstellung der Polyurethanesterschaumstoffe werden als Ausgangskomponenten eingesetzt:

1. Aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden beispielsweise solche der Formel

Q(NCO)$_n$

in der

n = 2 - 4, vorzugsweise 2,

und

Q einen aliphatischen Kohlenwasserstoffrest mit 2 -18, vorzugsweise 6 - 10 C-Atomen,

einen cycloaliphatischen Kohlenwasserstoffrest mit 4 -15, vorzugsweise 5 - 10 C-Atomen,

einen aromatischen Kohlenwasserstoffrest mit 6 -15, vorzugsweise 6 - 13 C-Atomen,

oder einen araliphatischen Kohlenwasserstoffrest mit 8 -15, vorzugsweise 8 - 13 C-Atomen,

bedeuten, z.B. solche Polyisocyanate, wie sie in der DE-OS 2 832 253, Seiten 10 - 11, beschrieben werden. Besonders bevorzugt werden in der Regel die technisch leicht zugänglichen Polyisocyanate, z.B. das 2,4- und 2,6-Toluylendiisocyanat sowie beliebige Gemische dieser Isomeren ("TDI"), Polyphenyl-polymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat bzw. vom 4,4'-und/oder 2,4'-Diphenylmethandiisocyanat ableiten.

2. Ausgangskomponenten sind ferner Polyester, Polycarbonate, Polylactone und Polyamide mit mindestens zwei gegenüber Isocyanaten reaktionsfähigen Wasserstoffatomen und einem Molekulargewicht in der Regel von 400 - 10,000. Hierunter versteht man neben Aminogruppen, Thiolgruppen oder Carboxylgruppen auf weisenden Verbindungen vorzugsweise Hydroxylgruppen aufweisende Verbindungen, insbesondere zwei bis acht Hydroxylgruppen aufweisende Verbindungen, speziell solche vom Molekulargewicht 1.000 bis 8.000, vorzugsweise 2.000 bis 4.000, z.B. derartige mindestens zwei, in der Regel 2 bis 8, vorzugsweise aber 2 bis 4, Hydroxylgruppen aufweisende Verbindungen, wie sie für die Herstellung von homogenen und von zellförmigen Polyurethanen an sich bekannt sind und wie z.B. in der DE-OS 2 832 253, Seiten 11 - 18, beschrieben werden.

Anteilig (bis zu 50 Gew.-%, bezogen auf Polyester, Polycarbonate, Polylactone und Polyamide) können auch mindestens zwei Hydroxylgruppen aufweisende Polyether vom Molekulargewicht 400 - 10.000 mitverwendet werden.

3. Als Treibmittel werden Wasser (bevorzugt) und/oder leicht flüchtige organische Substanzen verwendet.

4. Erfindungsgemäß werden die aus der Polyurethanchemie an sich bekannten Katalysatoren wie tert.-Amine und/oder metallorganische Verbindungen eingesetzt.

5. Als Flammschutzmittel wird expandierbarer Graphit (Blähgraphit) entweder alleine oder jedoch vorzugsweise unter Zusatz eines anorganischen Co-Flammschutzmittels, verwendet.

Erfindungsgemäß bevorzugt sind solche Graphittypen, die durch Schwefelsäure modifiziert worden sind. Ihr Gehalt an gebundenem Sulfat liegt in der Regel zwischen 5 und 20 %, je nach Herstellungsverfahren.

Möglich als Blähkomponente im Graphitgerüst sind jedoch beispielsweise auch Nitrat und Fluorid.

Als Co-Flammschutzmittel, die bevorzugt mitverwendet werden können, sind Ammoniumpolyphosphate des unterschiedlichsten Kondensationsgrades, Oligophosphate mit den unterschiedlichsten Kationenbestandteilen, Kalkstickstoff, Kalk, Aluminiumoxide, Aluminiumoxidhydrate und Boroxide. Jedoch können auch stickstoffreiche Komponenten wie Harnstoff, Melamin, Melaminderivate, Melaminsalze, Cyanamid und Dicyandiamid mitverwendet werden.

6. Ausgangskomponenten sind ferner gegebenenfalls Verbindungen mit mindestens zwei gegenüber Isocyanaten reaktionsfähigen Wasserstoffatomen und einem Molekulargewicht von 32 bis 399. Auch in diesem Fall versteht man hierunter Hydroxylgruppen und/ oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispiele hierfür werden in der DE-OS 2 832 253, Seiten 19 -20, beschrieben.

7. Gegebenenfalls mitzuverwenden sind auch oberflä chenaktive Zusatzstoffe, wie Emulgatoren und Schaumstabilisatoren. Als Emulgatoren sind solche auf Basis alkoxilierter Fettsäuren und höherer Akohole bevorzugt.

Als Schaumstabilisatoren kommen vor allem Polyethersiloxane, speziell wasserlösliche Vertreter, infrage. Diese Verbindungen sind im allgemeinen so aufgebaut, daß ein Copolymerisat aus Ethylenoxid und Propylenoxid mit einem Polydimethylsiloxanrest verbunden ist. Derartige Schaumstabilisatoren sind z.B. in den US-PS 2 834 748, 2 917 480 und 3 629 308 beschrieben.

Auch Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe, ferner Stabilstoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide können mitverwendet werden.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103 bis 113 beschrieben.

Durchführung des erfindungsgemäßen Verfahrens:

Die Reaktionskomponenten werden erfindungsgemäß nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US-PS 2 764 565 beschrieben werden. Einzelheiten über Verarbeitungseinrichtungen, die auch erfindungsgemäß infrage kommen, werden im Kunststoff-Handbuch, Band VII, herausgegeben von Vieweg und Höchtlen, Carl-Hanser-Verlag, München 1966, z.B. auf den Seiten 121 bis 205 beschrieben.

Bei der Schaumstoffherstellung kann erfindungsgemäß die Verschäumung auch in geschlossenen Formen durchgeführt werden. Dabei wird das Reaktionsgemisch in ein Form eingetragen. Als Formmaterial kommt Metall, z.B.

Aluminium, oder Kunststoff, z.B. Epoxidharz, infrage. In der Form schäumt das schaumfähige Reaktionsgemisch auf und bildet den Formkörper. Die Formverschäumung kann dabei so durchgeführt werden, daß das Formteil an seiner Oberfläche Zellstruktur aufweist. Sie kann aber auch so durchgeführt werden, daß das Formteil eine kompakte Haut und einen zelligen Kern aufweist. Erfindungsgemäß kann man in diesem Zusammenhang so vorgehen, daß man in die Form so viel schaumfähiges Reaktionsgemisch einträgt, daß der gebildete Schaumstoff die Form gerade ausfüllt. Man kann aber auch so arbeiten, daß man mehr schaumfähiges Reaktionsgemisch in die Form einträgt, als zur Ausfüllung des Forminneren mit Schaumstoff notwendig ist. Im letztgenannten Fall wird somit unter "overcharging" gearbeitet; eine derartige Verfahrensweise ist z.B. aus den US-PS 3 178 490 und 3 182 104 bekannt.

Bei der Formverschäumung werden vielfach an sich bekannte äußere Trennmittel," wie Siliconöle, mitverwendet. Man kann aber auch sogenannte "innere Trennmittel", gegebenenfalls im Gemisch mit äußeren Trennmitteln, verwenden, wie sie z.B. aus den DE-OS 2 121 670 und 2 307 589 bekannt geworden sind.

Selbstverständlich können aber auch Schaumstoffe durch Blockverschäumung oder nach dem an sich bekannten Doppeltransportbandverfahren hergestellt werden.

Die nach der Erfindung erhältlichen Produkte finden dort Anwendung, wo erhöhte Flammwidrigkeit für Polyurethanschaumstoffe erforderlich sind, wie z.B. im Bauwesen, für die Isolierung des Motorbereichs von Last- und Personenkraftwagen, als Beschichtungsstoffe mit erhöhter Flammwidrigkeit und zur flächigen Isolierung von Motorhauben zur Schallschutzwirkung.

Ausführungsbeispiele

Unter den für die Herstellung von Polyesterpolyurethan/harnstoffschaumstoffen üblichen Bedingungen werden zur Reaktion gebracht:

Beispiel 1

| 100 | Tle. | eines Esterpolyols mit einer OH-Zahl von 60 (Basis Adipinsäure, Diethylenglykol, Trimethylolpropan) (Desmophen® 2200 der Bayer AG), |
|---|---|---|
| 3,0 | Tle. | Wasser |
| 1,0 | Tle. | Aminkatalystaor (Desmorapid® DB der BAYER AG) |
| 1,5 | Tle. | Stabilisator (SE 232 der BP) |
| 5,0 | Tle. | Blähgraphit (GHS 3 der Sigri GmbH Meitingen) |
| 5,0 | Tle. | Exolit 422 der Hochest AG |
| 38,0 | Tle. | eines 1:1-Gemisches aus 80 Gew.-% 2,4- und 20 Gew.-% 2,6-Toluylendiisocyanat sowie 65 Gew.-% 2,4- und 35 Gew.-% 2,6-Toluylendiisocyanat Rohdichte: 54 kg/m$^3$ |

Der PUR-Esterschaumstoff wird folgenden Flammschutzprüfungen unterzogen, entsprechend den in der jeweiligen Norm aufgeführten Größe:

BS 5852, Part 2 Crib 5: bestanden, Brandzeit 4 Minuten, Krippe ca. 4 cm eingebrochen

UL 94: HF-1

DIN 4102: Baustoffklasse B3

MVSS (Docket 3.3.): bestanden

Beispiel 2

| 100 | Tle. | eines Esterpolyols mit einer OH-Zahl von 60 (Basis Adipinsäure, Diethylenglykol, Trimethylolpropan) (Desmophen® 2200 der Bayer AG), |
|---|---|---|
| 3 | Tle. | Wasser |
| 1,0 | Tle. | Aminkatalysator (Desmorapid® DB der BAYER AG) |
| 1,5 | Tle. | Stabilisator (SE 232 der BP) |
| 10 | Tle. | Blähgraphit (GHS 3 der Sigri GmbH Meitingen) |
| 10 | Tle. | Exolit 422 der Hoechst AG |
| 38 | Tle. | eines 1:1-Gemisches aus 80 Gew.-% 2,4- und 20 Gew.-% 2,6-Toluylendiisocyanat sowie 65 Gew.-% 2,4- und 35 Gew.-% 2,6-Tolylen-diisocyanat Rohdichte: 55 kg/m$^3$ |

Der PUR-Esterschaumstoff wurde folgenden Flammschutzprüfungen unterzogen:

BS 5852 Part 2, Crib 5, bestanden, Brandzeit 3,5 Minuten, Krippe ca. 3 cm eingebrochen.

UL 94: HF-1

DIN 4102: Baustoffklasse B2

MVSS Docket 3.3.: bestanden

Beispiel 3

| 100 | Tle. | eines Esterpolyols mit einer OH-Zahl von 60 (Basis Adipinsäure, Diethylenglykol, Trimethylolpropan) (Demophen® 2200 der Bayer AG), |
|---|---|---|
| 3 | Tle. | Wasser |
| 1,0 | Tle. | Aminkatalysator (Desmorapid® DB der BAYER AG) |
| 1,5 | Tle. | Stabilisator (SE 232 der BP) |
| 5 | Tle. | Blähgraphit (GHS 3 der Sigri GmbH Meitingen) |
| 10 | Tle. | Exolit 422 der Hoechst AG |
| 38 | Tle. | eines 1:1-Gemisches aus 80 Gew.-% 2,4- und 20 Gew.-% 2,6-Toluylendiisocyanat sowie 65 Gew.-% 2,4- und 35 Gew.-% 2,6-Toluylen-diisocyanat Rohdichte: 59 kg/m$^3$ |

Der PUR-Esterschaumstoff wurde folgenden Flammschutzprüfungen unterzogen:

BS 5852 Part 2, Crib 5, bestanden, Brandzeit 3,5 Minuten, Krippe ca. 3 cm eingebrochen

DIN 4102: Baustoffklasse B 2

UL 94: HBF

MVSS Docket 3.3.: bestanden

Beispiel 4

| 100 | Tle. | eines Esterpolyols mit einer OH-Zahl von 60 (Basis Adipinsäure, Diethylenglykol, Trimethylolpropan) (Desmophen® 2200 der Bayer AG), |
|---|---|---|
| 3 | Tle. | Wasser |
| 1,0 | Tle. | Aminkatalysator (Desmorapid® NMM der BAYER AG) |
| 0,9 | Tle. | Emulgator (EM der BAYER AG) |
| 10 | Tle. | Blähgraphit (GHS 3 der Sigri GmbH Meitingen) |
| 10 | Tle. | Martinal der Fa. Martinswerk, Bergheim |
| 38 | Tle. | eines 1:1-Gemisches aus 80 Gew.-% 2,4- und 20 Gew.-% 2,6-Toluylendiisocyanat sowie 65 Gew.-% 2,4- und 35 Gew.-% 2,6-Toluylen-diisocyanat Rohdichte: 58 kg/m$^3$ |

BS 5852, Part 2, Crib 5, bestanden, Brandzeit 5 Minuten, Krippe ca. 5 cm eingesackt.
DIN 4102: Baustoffklasse B2

Beispiel 5

| 100 | Tle. | eines Esterpolyols mit einer OH-Zahl von 60 (Basis Adipinsäure, Diethylenglykol, Trimethylolpropan) (Desmophen® 2200 der Bayer AG) |
|---|---|---|
| 3 | Tle. | Wasser |
| 1,0 | Tle. | Aminkatalysator (Desmorapid® NMM der BAYER AG) |
| 0,9 | Tle. | Emulgator (EM der BAYER AG) |
| 10 | Tle. | Blähgraphit (GHS 3 der Sigri GmbH Meitingen) |
| 10 | Tle. | Schlämmkreide |
| 38 | Tle. | eines 1:1-Gemisches aus 80 Gew.-% 2,4- und 20 Gew.-% 2,6-Toluylendiisocyanat sowie 65 Gew.-% 2,4- und 35 Gew.-% 2,6-Toluylen-diisocyanat Rohdichte: 57 kg/m$^3$ |

MVSS (Docket 3.3): bestanden
UL 94: HBF
DIN 4102: Baustoffklasse B2.

Beispiel 6

| 100 | Tle. | eines Esterpolyols mit einer OH-Zahl von 60 (Basis Adipinsäure, Diethylenglykol, Trimethylolpropan) (Desmophen® 2200 der Bayer AG) |
|---|---|---|
| 3 | Tle. | Wasser |
| 1,0 | Tle. | Aminkatalysator (Desmorapid® NMM der BAYER AG) |
| 0,9 | Tle. | Emulgator (EM der BAYER AG) |
| 10 | Tle. | Blähgraphit (GHS 3 der Sigri GmbH Meitingen) |
| 10 | Tle. | Kalkstickstoff |
| 38 | Tle. | eines 1:1-Gemisches aus 80 Gew.-% 2,4- und 20 Gew.-% 2,6-Toluylendiisocyanat sowie 65 Gew.-% 2,4- und 35 Gew.-% 2,6-Toluylen-diisocyanat Rohdichte: 56 kg/m$^3$ |

MVSS (Docket 3.3): bestanden
UL 94: HF-1
DIN 4102: Baustoffklasse B3.

Beispiel 7

6

| 100 | Tle | eines Esterpolyols mit einer OH-Zahl von 60 (Basis Adipinsäure, Diethylenglykol, Trimethylolpropan) (Desmophen® 2200 der Bayer AG) |
|---|---|---|
| 3 | Tle | Wasser |
| 1 | Tle | Aminaktivator (Desmorapid® DB der BAYER AG) |
| 1,5 | Tle | Stabilisator (SE 232 der BP) |
| 1,0 | Tle | Blähgraphit (GHS 3 der Sigri GmbH, Meitingen) |
| 3,8 | Tle | eines 1:1-Gemisches aus 80 Gew.-% 2,4- und 20 Gew.-% 2,6-Tuloylendiisocyanate sowie 65 Gew.-% 2,4- und 35 Gew.-% 2,6-Toluylen-diisocyanat Rohdichte: 53 kg/m$^3$ |

BS 5852, Part 2, Crib 5, bestanden, Brandzeit 5,5 Minuten, Krippe ca. 5 cm eingebrochen.
DIN 5102; Baustoffklasse B

Beispiel 8

| 100 | Tle | eines Esterpolyols mit einer OH-Zahl von 60 (Basis Adipinsäure, Diethylenglykol, Trimethylolpropan) |
|---|---|---|
| 3 | Tle | Wasser. |
| 1 | Tle | Aminaktivator (Desmorapid® DB der Bayer AG) |
| 1,5 | Tle | Stabilisator (SE 232 der BP) |
| 20 | Tle | Blähgraphit (GHS 3 der Sigri GmbH, Meitingen) |
| 38 | Tle | eines 1:1-Gemisches aus 80 Gew.-% 2,4- und 20 Gew.-% 2,6-Toluylendiisocyanat sowie 65 Gew.-% 2,4- und 35 Gew.-% 2,6-Toluylen-diisocyanat Rohdichte: 55 kg/m$^3$ |

BS 5852, Part 2, Crib 5, bestanden, Brandzeit 4 Minunten, Krippe ca. 3 cm eingebrochen.
DIN 5120: Baustoffklasse B.

**Ansprüche**

1. Verfahren zur Herstellung von Polyurethanschaumstoffen durch Umsetzung von 1) Polyisocanaten mit 2) mindestens zwei gegenüber Isocyanaten aktive Wasserstoffatome aufweisenden Polyestern, Polycarbonaten, Polylactonen und/oder Polyamiden vom Molekulargewicht 400 bis 10 000 in Gegenwart von 3) Wasser und/oder organischen Treibmitteln und von 4) Katalysatoren und 5) Flammschutzmitteln, gegebenenfalls in Gegenwart von 6) Verbindungen mit mindestens zwei gegenüber Isocyanaten reaktionsfähigen Wasserstoffatomen und einem Molekulargewicht von 32 bis 399 sowie 7) an sich bekannten oberflächenaktiven Zusatzstoffen und weiteren, an sich bekannten Hilfsmitteln, dadurch gekennzeichnet, daß als Flammschutzmittel 5)
a) 1 bis 30 Teile (bezogen auf 2)) eines durch anorganische blähfähige Materialien modifizierten Graphits, bevorzugt 1 bis 20 Teile,
verwendet werden.
2. Verfahren nach Anspruch 1, dadurch gekennzeichnet, daß als Flammschutzmittel
a) 1 bis 30 Teile (bezogen auf 2)) eines durch anorganische blähfähige Materialien modifizierten Graphits, bevorzugt 1 bis 20 Teile, besonders bevorzugt 2,5 bis 15 Teile, und
b) 1 bis 30 Teile (bezogen auf 2)) eines anorganischen Co-Flammschutzmittels, bevorzugt 1 bis 25 Teile, besonders bevorzugt 2,5 bis 20 Teile,
verwendet werden.
3. Verfahren nach Anspruch 1 und 2, dadurch gekennzeichnet, daß ein Sulfat-enthaltender Blähgraphit, dessen Sulfat-Gehalt zwischen 1 und 40 %, bevorzugt 1 bis 30 %, besonders bevorzugt 5 bis 20 % liegt, verwendet wird.
4. Verfahren nach Anspruch 2 und 3, dadurch gekennzeichnet, daß als Co-Flammschutzmittel Ammoniumpolyphosphat verwendet wird.
5. Verfahren nach Anspruch 2 und 3, dadurch gekennzeichnet, daß als Co-Flammschutzmittel Kalkstickstoff verwendet wird.

6. Verfahren nach Anspruch 2 und 3, dadurch gekennzeichnet, daß als Co-Flammschutzmittel Aluminiumoxidhydrat verwendet wird.

7. Verfahren nach Anspruch 2 und 3, dadurch gekennzeichnet, daß als Co-Flammschutzmittel Calciumcarbonat verwendet wird.

8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 428 307 (ICI) <br> * Seite 4 - Absatz 3 - Seite 5, Absatz 1; Seite 7, Absatz 4, Seite 8, Absatz 1; Seite 9, Absatz 3; Beispiel 1 * | 1-3 | C 08 K 3/04 <br> C 08 L 75/04 |
| Y | | 1-4 | |
| Y | EP-A-0 192 888 (DUNLOP) <br> * Seite 3, Zeilen 6-8; Beispiele 1,3,8 *; & GB-A- 21 68706 (Kat. D) | 1-4 | |
| A | US-A-3 574 644 (F. OLSTOWSKI et al.) <br> * Spalte 3, Zeilen 52-72; Beispiele 1,2 * | 1-3 | |

| | RECHERCHIERTE SACHGEBIETE (Int. Cl.4) |
|---|---|
| | C 08 G 18/00 <br> C 08 K 3/00 |

**Der vorliegende Recherchenbericht wurde für alle Patentansprüche erstellt**

| Recherchenort | Abschlußdatum der Recherche | Prüfer |
|---|---|---|
| BERLIN | 24-05-1989 | HOEPFNER W.W.G. |